Europäisches Patentamt

(19) European Patent Office

Office européen des brevets

(11) **EP 0 839 822 B1**

(12) **EUROPÄISCHE PATENTSCHRIFT**

(45) Veröffentlichungstag und Bekanntmachung des Hinweises auf die Patenterteilung:
**05.02.2003 Patentblatt 2003/06**

(51) Int Cl.$^7$: **C07F 17/00**

(21) Anmeldenummer: **97118615.0**

(22) Anmeldetag: **27.10.1997**

(54) **Verfahren zur Hydrierung von Metallocenen**

Process for hydrogenation of metallocenes

Procédé d'hydrogénation de métallocènes

(84) Benannte Vertragsstaaten:
**AT BE DE ES FR GB IT NL**

(30) Priorität: **31.10.1996 DE 19644040**

(43) Veröffentlichungstag der Anmeldung:
**06.05.1998 Patentblatt 1998/19**

(73) Patentinhaber: **Basell Polyolefine GmbH
50389 Wesseling (DE)**

(72) Erfinder:
• **Bingel, Carsten, Dr.
65830 Kriftel (DE)**
• **Hübscher, Erich, Dl.
65779 Kelkheim (DE)**
• **Niesert, Claus-Peter, Dr.
65929 Frankfurt (DE)**
• **Zenk, Roland, Dr.
65812 Bad Soden (DE)**

(56) Entgegenhaltungen:
**EP-A- 0 485 821        EP-A- 0 693 506**

**Beschreibung**

Die vorliegende Erfindung betrifft ein Verfahren zur Herstellung hydrierter und teilhydrierter Metallocene.

Hydrierte Metallocene wie Ethylenbis(tetrahydroindenyl)zirkoniumdichlorid und Dimethylsilandiylbis(tetrahydroindenyl)zirkoniumdichlorid sind aus J. Am. Chem. Soc. (1996), 118, 2105, J. Mol. Catal. A. Chem. (1995), 102, 59, EP-A-0 643 079, Macromolecules (1994), 27, 4477, Macromolecules (1996), 29, 2331 und JP-A-07 292 019 bekannt. Sie eignen sich für die Herstellung von Polyolefinen wie isotaktischem Polypropylen, Copolymeren und Elastomeren. Daneben sind eine Reihe weiterer hydrierter Metallocene bekannt, vgl. EP-A-0 581 754, Organometallics (1993), 12, 4391, JP-A-07 041 521 und Chem. Ber. (1994), 127, 2417. Hydrierte und teilhydrierte Metallocenen sind als Katalysatorvorstufen für die Polymerisation von Olefinen beschrieben, vgl. J. Organomet. Chem. (1995), 497, 181, Angew. Chem. (1992), 104, 1373, EP-A-0 344 887, J. Mol. Catal. A: Chem. (1995), 102, 59, EP-A-0 185 918 und EP-A-0 537 686.

Bei der Synthese von hydrierten oder teilhydrierten Metallocenen geht man in der Regel von den entsprechenden Metallocenen mit aromatischen Liganden aus. So kann aus Dimethylsilandiylbisindenylzirkoniumdichlorid durch Hydrierung das Octahydroderivat Dimethylsilandiylbis(4,5,6,7-tetrahydroindenyl)zirkoniumdichlorid hergestellt werden. Solche und ähnliche Reaktionen sind vielfach beschrieben, vgl. JP-A- 06 287 224, EP-A-344 887, J. Organomet. Chem. (1995), 497, 181, Organometallics (1991), 10, 1501 und J. Organomet. Chem. (1988), 342, 21.

Die bekannten Synthesevorschriften zur Hydrierung des aromatischen Ligandgerüsts von Metallocenen beschreiten im Prinzip alle den gleichen Weg. Das Metallocen wird in Dichlormethan gelöst oder suspendiert und in Gegenwart von Platinschwarz oder Platindioxid unter hohem Wasserstoffdruck hydriert, vgl. J. Organomet. Chem. (1988), 342, 21 und EP-A-344 887. In EP-A-0 485 821 wird beschrieben, daß die Hydrierung in trockenen, wasserfreien Lösungsmitteln wie Dichlormethan oder Glyme durchgeführt wird.

Dichlormethan und andere chlorierte Lösungsmittel können nur unter Einhaltung strenger Sicherheits- und Umweltauflagen in größeren Mengen eingesetzt werden. In chlorierten Lösungsmitteln können nur schwach aktivierende Hydrierkatalysatoren wie Platinschwarz oder Platindioxid verwendet werden, um Dehalogenierungsreaktionen zu vermeiden. Die Dehalogenierungsreaktionen führen zur Zersetzung des Produkts und zu Korrosionsproblemen.

Die Aufgabe der vorliegenden Erfindung liegt darin, ein wirtschaftliches und umweltfreundliches Verfahren zur Hydrierung von Metallocenen bereitzustellen, bei dem mit stärker aktivierenden Hydrierkatalysatoren unter milden Bedingungen und niedrigen Wasserstoffdrücken hohe Ausbeuten erzielt werden.

Die Aufgabe der vorliegenden Erfindung wird durch ein Verfahren zur Hydrierung von Metallocenen gelöst, wobei mindestens ein Metallocen mit mindestens einer Doppelbindung und/oder mindestens einem aromatischen Substituenten (im Folgenden: das nichthydrierte Metallocen) in mindestens einem nichthalogenierten aromatischen Lösungsmittel mit Wasserstoff in Gegenwart mindestens eines Hydrierungskatalysators behandelt wird.

Der Begriff nichthydriertes Metallocen bezeichnet das Metallocen, aus dem durch das in der vorliegenden Erfindung beschriebene Verfahren das teilhydrierte oder hydrierte Metallocen entsteht.

Nichthydrierte Metallocene wie Dimethylsilandiylbisindenylzirkoniumdichlorid oder Ethylenbisindenylzirkoniumdichlorid werden bevorzugt in nichthalogenierten aromatischen Lösungsmitteln hydriert. Auch Gemische der genannten Lösungsmittel können verwendet werden.

Das Produkt ist ein Metallocen mit veränderter Struktur und veränderten Polymerisationseigenschaften, das sich vom eingesetzten Metallocen dadurch unterscheidet, daß mindestens eine der im eingesetzten nichthydrierten Metallocen vorhandenen Doppelbindungen hydriert ist.

Erfindungsgemäß wird das nichthydrierte Metallocen in mindestens einem nicht halogenierten aromatischen Lösungsmittel gelöst oder suspendiert und in Gegenwart von mindestens einem Hydrierkatalysator mit Wasserstoff hydriert.

Die Ausgangssubstanz kann ein reines Metallocen (das nicht hydrierte Metallocen) oder ein Rohprodukt aus einer vorausgegangenen Metallocensynthese sein, das neben dem nichthydrierten Metallocen weitere Bestandteile enthält. Das Metallocen enthält ein Übergangsmetall, insbesondere der IVb Gruppe des Periodensystems der Elemente. Das eingesetzte Metallocen kann vorzugsweise die folgende Formel haben:

$$L_m MX_n,$$

wobei

L　gleich oder verschieden sind und einen $\pi$-gebundenen Cyclopentadienylliganden bedeuten, der mindestens eine hydrierbare Doppelbindung aufweist,

M　ein Metall der Gruppen IIIb bis VIb des Periodensystems der Elemente bedeutet,

X　ein Wasserstoffatom, eine $C_1$-$C_{40}$-Kohlenwasserstoffgruppe wie eine $C_1$-$C_1$-$C_{10}$-Alkoxy-, $C_1$-$C_{10}$-Alkoxy-, $C_6$-$C_{10}$-Aryl-, $C_6$-$C_{10}$-Aryloxy-, $C_2$-$C_{10}$-Alkenyl-, $C_7$-$C_{40}$-Arylalkyl-, $C_7$-$C_{40}$-Alkylaryl- oder $C_8$-$C_{40}$-Arylalkenylgruppe, OH-Gruppe, ein Halogenatom oder ein Pseudohalogen wie Nitril bedeutet,

m   eine Zahl von 1 bis 3 ist,

n   eine Zahl von 1 bis 5 und gleich der Wertigkeit von M minus m ist.

L   kann vorzugsweise Vinylcyclopentadienyl, Allylcyclopentadienyl, 1,3-Bis(4-pentenyl)cyclopentadienyl, Indenyl, 2-Methylindenyl. 2-Methyl-4,5-benzoindenyl, 2-Methyl-4-phenylindenyl, 2-Methyl-4-(1-naphthyl)indenyl, 1,2,3,4,5,6,7-Heptamethylindenyl, 2-Methyl-4,6-diisopropylindenyl, 2,4,6-Trimethylindenyl, 2-Phenylindenyl, Fluorenyl und 2,7-Di-tert-butylfluorenyl sein. Wenn mehrere Liganden vorhanden sind, können diese über eine Brücke miteinander verbunden sein.

X   bedeutet bevorzugt eine $C_1$-$C_4$-Alkyl-, $C_1$-$C_3$-Alk-oxy-, $C_6$-$C_8$-Aryl-, $C_6$-$C_8$-Aryloxy-, $C_2$-$C_4$-Alkenyl-, $C_7$-$C_{12}$-Arylalkyl-, $C_7$-$C_{12}$-Alkylaryl- oder $C_8$-$C_{12}$-Arylalkenylgruppe, oder Chlor.

M   bedeutet insbesondere Ti, Zr oder Hf.

Die nachstehende Auflistung führt beispielhaft aber nicht limitierend nichthydrierte Metallocene auf.

(Cyclopentadienyl)(indenyl)zirkoniumdichlorid,
(Methylcyclopentadienyl)(2-methylindenyl)zirkoniumdichlorid,
Bisindenylzirkoniumdichlorid,
Bisindenylhafniumdichlorid,
Bis(2-methyl-4,5-benzoindenyl)zirkoniumdichlorid,
Bis(2-methylindenyl)zirkoniumdichlorid,
Bis(2-methylindenyl)hafniumdichlorid,
Isopropyliden(cyclopentadienyl)(indenyl)zirkoni-umdichlorid,
Isopropyliden(cyclopentadienyl)(indenyl)hafnium-dibromid,
rac-Isopropylidenbisindenylzirkoniumdichlorid,
meso-Isopropylidenbisindenylzirkoniumdichlorid,
Isopropyliden(cyclopentadienyl)(fluorenyl)zirkoni-umdichlorid,
Diphenylmethylen(cyclopentadienyl)(fluorenyl)zir-koniumdichlorid,
Diphenylmethylen(cyclopentadienyl)(fluorenyl)haf-niumdichlorid,
1-Phenylethyliden(cyclopentadienyl)(fluorenyl)zir-koniumdichlorid,
Isopropyliden(3-methylcyclopentadienyl)(fluore-nyl)zirkoniumdichlorid,
Isopropyliden(3-tert-butylcyclopentadienyl)(fluorenyl)zirkoniumdichlorid,
rac-Dimethylsilandiylbisindenylzirkoniumdichlorid,
meso-Dimethylsilandiylbisindenylzirkoniumdichlorid,
rac-Dimethylsilandiylbis(2-methylindenyl)zirkoniumdibromid,
meso-Dimethylsilandiylbis(2-methylindenyl)zirkoniumdichlorid,
rac-Dimethylsilandiylbis(2-methyl-4-phenylindenyl)zirkoniumdichlorid,

meso-Dimethylsilandiylbis(2-methyl-4-phenylindenyl)zirkoniumdichlorid,
rac-Dimethylsilandiylbis[2-methyl-4-(1-naphthyl)indenyl]zirkoniumdifluorid,
rac-Dimethylsilandiylbis[2-methyl-4-(1-naphthyl)indenyl]hafniumdichlorid,
meso-Dimethylsilandiylbis[2-methyl-4-(1-naphthyl)indenyl]zirkoniumdichlorid,
rac-Dimethylsilandiylbis(2-methyl-4,5-benzoindenyl)zirkoniumdichlorid,
meso-Dimethylsilandiylbis(2-methyl-4,5-benzoindenyl)zirkoniumdichlorid,
rac-Dimethylsilandiylbis(4,5-benzoindenyl)zirkoniumdichlorid,
meso-Dimethylsilandiylbis(4, 5-benzoindenyl)zirkoniumdichlorid,
rac-Dimethylsilandiylbis(2-methyl-4,6-diisopropylindenyl)zirkoniumdifluorid,
meso-Dimethylsilandiylbis(2-methyl-4,6-diisopropylindenyl)zirkoniumdichlorid,
rac-Dimethylsilandiylbis(2-ethylindenyl)zirkoniumdichlorid,
meso-Dimethylsilandiylbis(2-ethylindenyl)zirkoniumdichlorid,
rac-Dimethylsilandiylbis(2-ethyl-4-phenylindenyl)zirkoniumdichlorid,
rac-Dimethylsilandiylbis(2-ethyl-4-phenylindenyl)hafniumdichlorid,
meso-Dimethylsilandiylbis(2-ethyl-4-phenylindenyl)zirkoniumdichlorid,
rac-Dimethylsilandiylbis[2-ethyl-4-(1-naphthyl)indenyl]zirkoniumdichlorid,
meso-Dimethylsilandiylbis[2-ethyl-4-(1-naphthyl)indenyl]zirkoniumdichlorid,
rac-Dimethylsilandiylbis(2-ethyl-4,5-benzoindenyl)zirkoniumdichlorid,
meso-Dimethylsilandiylbis(2-ethyl-4,5-benzoindenyl)zirkoniumdichlorid,
rac-Dimethylsilandiylbis(4,5-benzoindenyl)zirkoniumdichlorid,
meso-Dimethylsilandiylbis(4,5-benzoindenyl)zirkoniumdichlorid,
rac-Dimethylsilandiylbis(2-ethyl-4,6-diisopropylindenyl)zirkoniumdichlorid,
meso-Dimethylsilandiylbis(2-ethyl-4,6-diisopropylindenyl)zirkoniumdichlorid,
rac-Dimethylsilandiylbis(2-ethyl-4,6-dimethylindenyl)zirkoniumdichlorid,
meso-Dimethylsilandiylbis(2-ethyl-4,6-dimethylindenyl)zirkoniumdichlorid,
rac-Dimethylsilandiylbis(2,4,6-trimethylindenyl)zirkoniumdichlorid,
rac-Dimethylsilandiylbis(2,4,6-trimethylindenyl)hafniumdichlorid,
meso-Dimethylsilandiylbis(2,4,6-trimethylindenyl)zirkoniumdichlorid.

Weitere Bestandteile können anorganische Salze, wie NaCl, LiCl, KCl, KBr, $MgCl_2$, $MgBr_2$, MgBrCl, $CaCl_2$, $AlCl_3$ sowie Filterhilfsmittel wie $Na_2SO_4$, Quarzmehl, Celite sein. Weitere Bestandteile können auch organische und metallorganische Nebenkomponenten sein. Organische Nebenkomponenten sind Lösungsmittelreste, organische Verunreinigungen aus den Edukten, nicht umgesetzte Edukte und nicht vollständig umgesetzte Intermediate der Metallocensynthese. Metallorganische Nebenkomponenten können isomere Metallocene, oligomere Metallocene und solche Verbindungen sein, die bei der Herstellung des Rohstoffs entstanden sind oder durch Verunreinigungen der Ausgangsverbindungen eingetragen wurden. Metallorganische Nebenkomponenten sind alle Verbindungen, die mindestens eine Metall-Kohlenstoffbindung aufweisen, mit Ausnahme des nichthydrierten Metallocens selbst.

Als aromatische Lösungsmittel werden Lösungsmittel bezeichnet, die mindestens einen aromatischen Sechsring pro Molekül enthalten. Beispiele für nichthalogenierte aromatische Lösungsmittel sind Benzol, Toluol, Xylol (als Isomerengemisch), o-Xylol, m-Xylol, p-Xylol, Mesitylen, Tetralin, Anisol, Cumol, 1,2-Diethylbenzol, 1,3-Diethylbenzol, 1,4-Diethylbenzol, 1-Ethyl-2-methylbenzol, 1-Ethyl-3-methylbenzol, 1-Ethyl-4-methylbenzol. Bevorzugt sind Anisol, Toluol, Benzol, Xylole (als Gemisch oder Reinstoff) und Tetralin.

Das beschriebene Verfahren bezieht sich auf einen Temperaturbereich von 0°C bis 150 °C. Insbesondere wird die Hydrierung bei 15°C bis 100°C durchgeführt.

Als Hydrierkatalysatoren kommen solche Verbindungen oder Elemente in Frage, die unter den angewendeten Hydrierbedingungen das Lösungsmittel nicht oder nur teilweise hydrieren. Beispiele für solche Hydrierkatalysatoren sind Palladium auf Aktivkohle, Palladium auf Bariumsulfat, Palladium auf Aluminiumoxid, Palladiumschwarz, Palladiumschwamm, Platinoxid, Platinschwarz, Platinschwamm. Bevorzugt werden Palladiumkatalysatoren, insbesondere Palladium auf Aktivkohle.

Die nachstehende Auflistung führt beispielhaft aber nicht limitierend Metallocene auf, die durch das erfindungsgemäße Verfahren hergestellt werden können.

(Cyclopentadienyl)(4,5,6,7-tetrahydroindenyl)zirkoniumdichlorid,
(Methylcyclopentadienyl)(2-methyl-4,5,6,7-tetrahydroindenyl)zirkoniumdichlorid,
Bis(2-methyl-4,5-benzo-6,7-dihydroindenyl)zirkoniumdichlorid,
Bis(4,5,6,7-tetrahydroindenyl)zirkoniumdichlorid,
Bis(2-methyl-4,5,6,7-tetrahydroindenyl)zirkoniumdichlorid,
Bis(2-methyl-4,5,6,7-tetrahydroindenyl)hafniumdichlorid,
Isopropyliden(cyclopentadienyl)(4,5,6,7-tetrahydroindenyl)zirkoniumdichlorid,
Isopropyliden(cyclopentadienyl)(4,5,6,7-tetrahydroindenyl)hafniumdibromid,
rac-Isopropylidenbis(4,5,6,7-tetrahydroindenyl)zirkoniumdichlorid,
meso-Isopropylidenbis(4,5,6,7-tetrahydroindenyl)zirkoniumdichlorid,
Isopropyliden(cyclopentadienyl)(1,2,3,4,5,6,7,8-octahydrofluorenyl)zirkoniumd ichlorid,
Diphenylmethylen(cyclopentadienyl)(1,2,3,4,5,6,7,8-octahydrofluorenyl)zirkoniumdichlorid,
Diphenylmethylen(cyclopentadienyl)(1,2,3,4,5,6,7,8-octahydrofluorenyl)hafniumdichlorid,
1-Phenylethyliden(cyclopentadienyl)(1,2,3,4,5,6,7,8-octahydrofluorenyl)zirkoniumdichlorid,
Isopropyliden(3-methylcyclopentadienyl)(1,2,3,4,5,6,7,8-octahydrofluorenyl)zirkoniumdichlorid,
Isopropyliden(3-tert-butylcyclopentadienyl)(1,2,3,4,5,6,7,8-octahydrofluorenyl)zirkoniumdichlorid,
rac-Dimethylsilandiylbis(4,5,6,7-tetrahydroindenyl)zirkoniumdichlorid,
meso-Dimethylsilandiylbis(4,5,6,7-tetrahydroindenyl)zirkoniumdichlorid,
rac-Dimethylsilandiylbis(2-methyl-4,5,6,7-tetrahydroindenyl)zirkoniumdichlorid,
rac-Dimethylsilandiylbis(2-4,5,6,7-tetrahydromethylindenyl)zirkoniumdibromid,
meso-Dimethylsilandiylbis(2-methyl-4, 5, 6, 7-tetrahydroindenyl)zirkoniumdichlorid,
rac-Dimethylsilandiylbis(2-methyl-4-phenyl-4,5,6,7-tetrahydroindenyl)zirkoniumdichlorid,
meso-Dimethylsilandiylbis(2-methyl-4-phenyl-4,5,6,7-tetrahydroindenyl)zirkoniumdichlorid,
rac-Dimethylsilandiylbis[2-methyl-4-(1-naphthyl)-4,5,6,7-tetrahydroindenyl]zirkoniumdichlorid,
rac-Dimethylsilandiylbis[2-methyl-4-(1-naphthyl)-4,5,6,7-tetrahydroindenyl]hafniumdichlorid,
meso-Dimethylsilandiylbis[2-methyl-4-(1-naphthyl)-4,5,6,7-tetrahydroindenyl]zirkoniumdichlorid,
rac-Dimethylsilandiylbis(2-methyl-4,5,6,7-tetrahydro-4,5-benzoindenyl)zirkoniumdichlorid,
meso-Dimethylsilandiylbis(2-methyl-4,5,6,7-tetrahydro-4,5-benzoindenyl)zirkoniumdichlorid,
rac-Dimethylsilandiylbis(4,5,6,7-tetrahydro-4,5-benzoindenyl)zirkoniumdichlorid,
meso-Dimethylsilandiylbis(4,5,6,7-tetrahydro-4,5-benzoindenyl)zirkoniumdichlorid,
rac-Dimethylsilandiylbis(2-methyl-4,6-diisopropylindenyl)zirkoniumdichlorid,
rac-Dimethylsilandiylbis(2-methyl-4,6-diisopropyl-4,5,6,7-tetrahydroindenyl)zirkoniumdifluorid,
meso-Dimethylsilandiylbis(2-methyl-4,6-diisopropyl-4,5,6,7-tetrahydroindenyl)zirkoniumdichlorid,

rac-Dimethylsilandiylbis(2-ethyl-4,5,6,7-tetrahydroindenyl)zirkoniumdichlorid,
meso-Dimethylsilandiylbis(2-ethyl-4,5,6,7-tetrahydroindenyl)zirkoniumdichlorid,
rac-Dimethylsilandiylbis(2-ethyl-4-phenyl-4,5,6,7-tetrahydroindenyl)zirkoniumdichlorid,
rac-Dimethylsilandiylbis(2-ethyl-4-phenyl-4,5,6,7-tetrahydroindenyl)hafniumdichlorid,
meso-Dimethylsilandiylbis(2-ethyl-4-phenyl-4,5,6,7-tetrahydroindenyl)zirkoniumdichlorid,
rac-Dimethylsilandiylbis[2-ethyl-4-(1-naphthyl)-4,5,6,7-tetrahydroindenyl]-zirkoniumdichlorid,
meso-Dimethylsilandiylbis[2-ethyl-4-(1-naphthyl)-4,5,6,7-tetrahydroindenyl]-zirkoniumdichlorid,
rac-Dimethylsilandiylbis(2-ethyl-4,5,6,7-tetrahydro-4,5-benzoindenyl)zirkoniumdichlorid,
meso-Dimethylsilandiylbis(2-ethyl-4,5,6,7-tetrahydro-4,5-benzoindenyl)zirkoniumdichlorid,
rac-Dimethylsilandiylbis(4,5-benzo4,5,6,7-tetrahydroindenyl)zirkoniumdichlorid,
meso-Dimethylsilandiylbis(4,5,6,7-tetrahydro-4,5-benzoindenyl)zirkoniumdichlorid,
rac-Dimethylsilandiylbis(2-ethyl-4,6-diisopropyl-4,5,6,7-tetrahydroindenyl)-zirkoniumdichlorid,
meso-Dimethylsilandiylbis(2-ethyl-4,6-diisopropyl-4,5,6,7-tetrahydroindenyl)-zirkoniumdichlorid,
rac-Dimethylsilandiylbis(2-ethyl-4,6-dimethyl-4,5,6,7-tetrahydroindenyl)zirkoniumdichlorid,
meso-Dimethylsilandiylbis(2-ethyl-4,6-dimethyl-4,5,6,7-tetrahydroindenyl)-zirkoniumdichlorid,
rac-Dimethylsilandiylbis(2,4,6-trimethylindenyl)zirkoniumdichlorid,
rac-Dimethylsilandiylbis(2,4,6-trimethyl-4,5,6,7-tetrahydroindenyl)hafniumdichlorid,
meso-Dimethylsilandiylbis(2,4,6-trimethyl-4,5,6,7-tetrahydroindenyl)zirkoniumdichlorid.

Das neue Verfahren hat überraschenderweise viele Vorteile. Durch Verwendung nicht halogenierter (z. B. nichtchlorierter) aromatischer Lösungsmittel können wirksamere Hydrierkatalysatoren eingesetzt und die Reaktionen bereits bei relativ niedrigen Wasserstoffdrücken durchgeführt werden. Das ist besonders für technische Anwendungen interessant. Man vermeidet die unter Sicherheits- und Umweltaspekten bedenklichen chlorierten Lösungsmittel. Durch Verwendung von nichthalogenierten aromatischen Kohlenwasserstoffen wird die anschließende Aufarbeitung der Metallocene erleichtert. Bei den bevorzugten Lösungsmitteln wie Anisol, Toluol, Benzol und Xylol kann das Produkt bei erhöhter Temperatur vollständig gelöst, der Hydrierkatalysator abgetrennt und das Produkt kristallisiert werden, wobei ein breiterer Temperaturbereich bei Temperaturen oberhalb 0°C zur Verfügung steht, verglichen mit Dichlormethan. Dichlormethan wird im Stand der Technik bisher ausschließlich verwendet. Zur Kristallisation können daher tiefe Temperaturen (unter 0°C) vermieden werden. Durch die gute Löslichkeit der hydrierten Produkte in nichthalogenierten aromatischen Lösungsmitteln bei erhöhter Temperatur ist die Hydrierung sehr konzentrierter Metallocensuspensionen möglich, was im Hinblick auf eine gute Raum-Zeit-Ausbeute von Vorteil ist. Außerdem sind, verglichen mit bekannten Verfahren, die benötigten Mengen an Hydrierkatalysator wesentlich preiswerter. Für den Fall, daß Metallocene aus ihren Rohproduktgemischen mit aromatischen Lösungsmitteln extrahiert werden, besteht die Möglichkeit, solche Extrakte als Lösung oder Suspension direkt und ohne Lösungsmittelwechsel einer nachgeschalteten Hydrierung zu unterwerfen.
Die vorliegende Erfindung wird anhand der nachfolgenden Beispiele näher erläutert.

Beispiele

Beispiel 1

5,0 g (12,0 mmol) rac-Ethylenbis(indenyl)zirkoniumdichlorid und 0,3 g (0,28 mmol) Palladium (10%ig auf Aktivkohle) wurden in 100 ml Toluol suspendiert und bei 70°C und einem Wasserstoffdruck von 20 bar hydriert. Nach 5 Stunden wurde die Reaktionsmischung heiß filtriert, auf die Hälfte eingeengt und bei 0-5°C kristallisiert. Ausbeute: 4,6 g (10,8 mmol; 90%) rac-Ethylenbis(4,5,6,7-tetrahydroindenyl)zirkoniumdichlorid.

Beispiel 2

5,0 g (12,0 mmol) rac-Ethylenbis(indenyl)zirkoniumdichlorid und 0,3 g (0,28 mmol) Palladium (10%ig auf Aktivkohle) wurden in 100 ml Anisol suspendiert und bei 70°C und einem Wasserstoffdruck von 20 bar hydriert. Nach 6 Stunden wurde die Reaktionsmischung heiß filtriert, auf die Hälfte eingeengt und bei 0-5°C kristallisiert. Ausbeute: 4,3 g (10,0 mmol; 84%) rac-Ethylenbis(4,5,6,7-tetrahydroindenyl)zirkoniumdichlorid.

Vergleichsbeispiel 1

5,0 g (12,0 mmol) rac-Ethylenbis(indenyl)zirkoniumdichlorid und 0,3 g (1,3 mmol) $PtO_2$ wurden in 100 ml Dichlormethan suspendiert und bei 25°C und einem Wasserstoffdruck von 100 bar hydriert. Nach 5 Stunden wurde die Reaktionsmischung mit 2500 ml Dichlormethan verdünnt, filtriert, im Vakuum von Lösungsmittel befreit und der Rückstand aus heißem Toluol umkristallisiert. Ausbeute: 3,0 g (6,9 mmol; 58%) rac-Ethylenbis(4,5,6,7-tetrahydroindenyl)zirkoniumdichlorid.

Vergleichsbeispiel 2 gemäß J. Organomet. Chem. (1985), 288, 63

1 g (2,4 mmol) rac-Ethylenbis(indenyl)zirkoniumdichlorid und 75 mg (0,33 mmol) $PtO_2$ wurden in 25

ml Dichlormethan suspendiert und in einem 100 ml Handautoklav bei 100 bar Wasserstoff 30 min lang hydriert (Raumtemperatur). Die Mischung wurde mit 500 ml Dichlormethan verdünnt, filtriert und das Filtrat eingedampft. Der hellbraune feste Rückstand wurde gründlich mit Petrolether gewaschen und aus heißem Toluol umkristallisiert. Ausbeute: 650 mg (1,5 mmol; 65%) rac-Ethylenbis(4,5,6,7-tetrahydroindenyl)zirkoniumdichlorid.

Vergleichsbeispiel 3 gemäß J. Organomet. Chem. (1988), 342, 21

4,2 g (10,0 mmol) rac-Ethylenbis(indenyl)zirkoniumdichlorid und 100 mg $PtO_2$ (0,44 mmol) wurden in 70 ml Dichlormethan suspendiert bei-70 bar Wasserstoff 8 Stunden lang hydriert (Raumtemperatur). Die Mischung wurde mit 300 ml Dichlormethan verdünnt, durch Celite filtriert und das Filtrat im Vakuum eingedampft. Der Rückstand wurde aus heißem Toluol umkristallisiert. Ausbeute: 2,7 g (6,5 mmol; 65%) rac-Ethylenbis(4,5,6,7-tetrahydroindenyl)zirkoniumdichlorid.

Beispiel 3

5,0 g (11,2 mmol) rac-Dimethylsilandiylbis(indenyl)zirkoniumdichlorid und 0,3 g (0,28 mmol) Palladium (10%ig auf Aktivkohle) wurden in 100 ml Toluol suspendiert und bei 70 °C und einem Wasserstoffdruck von 20 bar hydriert. Nach 5 Stunden wurde die Reaktionsmischung heiß filtriert, auf die Hälfte eingeengt und bei 0-5 °C kristallisiert. Ausbeute: 4,7 g (10,4 mmol; 93%) rac-Dimethylsilandiylbis(4,5,6,7-tetrahydroindenyl)zirkoniumdichlorid.

Beispiel 4

5,0 g (11,2 mmol) rac-Dimethylsilandiylbis(indenyl)zirkoniumdichlorid und 0,3 g (0,28 mmol) Palladium (10%ig auf Aktivkohle) wurden in 100 ml Anisol suspendiert und bei 70°C und einem Wasserstoffdruck von 20 bar hydriert. Nach 6 Stunden wurde die Reaktionsmischung heiß filtriert, auf die Hälfte eingeengt und bei 0-5°C kristallisiert. Ausbeute: 4,5 g (9,9 mmol; 88%) rac-Dimethylsilandiylbis(4,5,6,7-tetrahydroindenyl)zirkoniumdichlorid.

Vergleichsbeispiel 4

5,0 g (11,2 mmol) rac-Dimethylsilandiylbis(indenyl)zirkoniumdichlorid und 0,3 g (1,0 mmol) $PtO_2$ (Hydrat) wurden in 100 ml Dichlormethan suspendiert und bei Raumtemperatur und einem Wasserstoffdruck von 20 bar hydriert. Nach 5 Stunden wurde die Reaktionsmischung filtriert, im Vakuum vom Lösungsmittel befreit und der Rückstand aus heißem Toluol kristallisiert. Ausbeute: 1,8 g (3,9 mmol; 35%) rac-Dimethylsilandiylbis(4,5,6,7-tetrahydroindenyl)zirkoniumdichlorid.

Vergleichsbeispiel 5 gemäß J. Organomet. Chem. (1995), 497, 181

6,33 g (14,1 mmol) rac-Dimethylsilandiylbis(indenyl)zirkoniumdichlorid und zwei Spatelspitzen $PtO_2$ (Hydrat) wurden in 500 ml Dichlormethan suspendiert und drei Stunden lang bei Raumtemperatur in einem Stahlautoklaven bei 17 bar Wasserstoffdruck hydriert. Die resultierende Lösung wurde über eine D4-Fritte filtriert, zur Trockne eingedampft und aus 70°C heißem Toluol umkristallisiert. Ausbeute: 2,06 g (4,5 mmol; 32%) rac-Dimethylsilandiylbis(4,5,6,7-tetrahydroindenyl)zirkoniumdichlorid.

Vergleichsbeispiel 6 gemäß EP-A-0 344 887

Eine nicht exakt angegebene Menge an rac-Dimethylsilandiylbis(indenyl)zirkoniumdichlorid und 0,5 g (2,6 mmol) Platinschwarz oder (2,2 mmol) $PtO_2$ wurden in 200 ml Dichlormethan suspendiert und vier Stunden lang bei 45°C in einem Stahlautoklaven bei 41 bar Wasserstoffdruck hydriert. Die resultierende Lösung wurde filtriert und auf weniger als 100 ml eingeengt. rac-Dimethylsilandiylbis(4,5,6,7-tetrahydroindenyl)zirkoniumdichlorid kristallisierte aus der Lösung aus (maximale Ausbeute: 20 g (44 mmol) bezogen auf 44 ml (380 mmol) Inden; 23%).

Beispiel 5

4,0 g (9,0 mmol) rac-Dimethylsilandiylbis(2-methyl-4,5-benzindenyl)zirkoniumdichlorid und 0,3 g (0,28 mmol) Palladium (10%ig auf Aktivkohle) wurden in 100 ml Toluol suspendiert und bei 70°C und einem Wasserstoffdruck von 30 bar hydriert. Nach 6 Stunden wurde die Reaktionsmischung heiß filtriert, mit 2000 ml heißem Toluol extrahiert und auf 300 ml eingeengt. Bei 0-5°C kristallisierte das teilhydrierte Produkt rac-Dimethylsilandiylbis(2-methyl-6,7-dihydro-4,5-benzindenyl) zirkoniumdichlorid aus. Ausbeute: 2,6 g (4,5 mmol; 50%). $^1$H-NMR (300 MHz, $CDCl_3$): d = 7,42 (m, 2 H); 7,3-7,14 (m, 4 H); 7,2 (m, 2 H); 6,96 (s, 2 H); 2,82 (m, 4 H); 2,25 (s, 6 H); 1,02 (s, 6 H).

Beispiel 6

3,0 g (6,9 mmol) rac-Isopropylidenbis(indenyl) zirkoniumdichlorid und 0,3 g (0,28 mmol) Palladium (10%ig auf Aktivkohle) wurden in 100 ml Toluol suspendiert und bei 50°C und einem Wasserstoffdruck von 60 bar hydriert. Nach 6 Stunden wurde die Reaktionsmischung heiß filtriert, mit 200 ml heißem Toluol extrahiert und auf 40 ml eingeengt. Bei 0-5°C kristallisierte das Produkt aus. Ausbeute: 1,9 g (4,3 mmol; 63%) rac-Isopropylidenbis(4,5,6,7-tetrahydroindenyl) zirkoniumdichlorid. $^1$H-NMR (300 MHz, $CDCl_3$): d = 6,37 (d, 2 H); 5,48 (d, 2 H); 2,6-3,0 (m, 6 H); 2,3-2,5 (m, 2 H); 1,4-2,0 (m, 8H); 1,85 (s, 6 H).

Beispiel 7

3,0 g (7,8 mmol) Isopropyliden(cyclopentadienyl)(indenyl)zirkoniumdichlorid und 0,3 g (0,28 mmol) Palladium (10%ig auf Aktivkohle) wurden in 100 ml Toluol suspendiert und bei 50°C und einem Wasserstoffdruck von 20 bar hydriert. Nach 6 Stunden wurde die Reaktionsmischung heiß filtriert und auf 40 ml eingeengt. Bei 0-5°C kristallisierte das Produkt aus. Ausbeute: 2,1 g (5,4 mmol; 69%) Isopropyliden(cyclopentadienyl)(4,5,6,7-tetrahydroindenyl)zirkoniumdichlorid. $^1$H-NMR (300 MHz, CDCl$_3$): d = 6,78 (m, 1 H); 6,62 (m, 1 H); 6,25 (m, 1 H); 5,72 (m, 1 H); 5,62 (m, 2 H); 2,9-2,6 (m, 3 H); 2,5-2,3 (m, 1 H); 2,0-1,3 (m, 4 H); 1,90 (s, 3 H); 1,80 (s, 3 H).

**Patentansprüche**

1.  Verfahren zur Hydrierung von Metallocenen, wobei mindestens ein Metallocen mit mindestens einer Doppelbindung und/oder mindestens einem aromatischen Substituenten in mindestens einem nicht halogenierten aromatischen Lösungsmittel mit Wasserstoff in Gegenwart mindestens eines Hydrierungskatalysators behandelt wird.

2.  Verfahren nach Anspruch 1, wobei das Metallocen eine Übergangsmetallverbindung der Gruppe IVb des Periodensystems der Elemente enthält.

3.  Verfahren nach einem oder mehreren der Ansprüche 1 bis 2, wobei als nichthalogenierte aromatische Lösungsmittel Benzol, Toluol, Xylol, o-Xylol, m-Xylol, p-Xylol, Mesitylen, Tetralin, Anisol, Cumol, 1,2-Diethylbenzol, 1,3-Diethylbenzol, 1,4-Diethylbenzol, 1-Ethyl-2-methylbenzol, 1-Ethyl-3-methylbenzol, 1-Ethyl-4-methylbenzol, bevorzugt Anisol, Toluol, Benzol, Xylol oder Tetralin verwendet werden.

4.  Verfahren nach einem oder mehreren der Ansprüche 1 bis 3, wobei die Temperatur im Bereich von 0°C bis 150°C, bevorzugt von 15°C bis 100°C eingestellt wird.

5.  Verfahren nach einem oder mehreren der Ansprüche 1 bis 4, wobei als Hydrierkatalysatoren Palladiumkatalysatoren wie Palladium auf Aktivkohle, Palladium auf Bariumsulfat, Palladium auf Aluminiumoxid, Palladiumschwarz, Palladiumschwamm, Platinoxid, Platinschwarz, Platinschwamm eingesetzt werden.

**Claims**

1.  A process for the hydrogenation of metallocenes, which comprises treating at least one metallocene containing at least one double bond and/or at least one aromatic substituent in at least one nonhalogenated aromatic solvent with hydrogen in the presence of at least one hydrogenation catalyst.

2.  The process as claimed in claim 1, wherein the metallocene comprises a transition metal compound of group IVb of the Periodic Table of the Elements.

3.  The process as claimed in one or both of claims 1 and 2, wherein the nonhalogenated aromatic solvents used are benzene, toluene, xylene, o-xylene, m-xylene, p-xylene, mesitylene, tetralin, anisole, cumene, 1,2-diethylbenzene, 1,3-diethylbenzene, 1,4-diethylbenzene, 1-ethyl-2-methylbenzene, 1-ethyl-3-methylbenzene, 1-ethyl-4-methylbenzene, preferably anisole, toluene, benzene, xylene or tetralin.

4.  The process as claimed in one or more of claims 1 to 3, wherein the temperature is set in the range from 0°C to 150°C, preferably from 15°C to 100°C.

5.  The process as claimed in one or more of claims 1 to 4, wherein the hydrogenation catalysts used are palladium catalysts such as palladium on activated carbon, palladium on barium sulfate, palladium on aluminum oxide, palladium black, palladium sponge, platinum oxide, platinum black, platinum sponge.

**Revendications**

1.  Procédé d'hydrogénation de métallocènes, dans lequel on traite à l'hydrogène au moins un métallocène présentant au moins une double liaison et/ou au moins un substituant aromatique, dans au moins un solvant aromatique non halogéné, en présence d'au moins un catalyseur d'hydrogénation.

2.  Procédé selon la revendication 1, dans lequel le métallocène comprend un composé de métal de transition du groupe IVb de la Classification Périodique des Eléments.

3.  Procédé selon l'une ou plusieurs des revendications 1 à 2, dans lequel on met en oeuvre, en tant que solvants aromatiques non halogénés, le benzène, le toluène, le xylène, le o-xylène, le m-xylène, le p-xylène, le mésitylène, la tétraline, l'anisole, le cumène, le 1,2-diéthylbenzène, le 1,3-diéthylbenzène, le 1,4-diéthylbenzène, le 1-éthyl-2-méthylbenzène, le 1-éthyl-2-méthylbenzène, le 1-éthyl-4-méthylbenzène, de préférence l'anisole, le toluène, le benzène, le xylène ou la tétraline.

4. Procédé selon l'une ou plusieurs des revendications 1 à 3, dans lequel on choisit la température dans la plage de 0°C à 150°C, de préférence dans la plage de 15°C à 100°C.

5. Procédé selon l'une ou plusieurs des revendications 1 à 4, dans lequel on met en oeuvre, en tant que catalyseurs d'hydrogénation, les catalyseurs de palladium tels que le palladium sur charbon actif, le palladium sur sulfate de baryum, le palladium sur oxyde d'aluminium, le noir de palladium, l'éponge de palladium, l'oxyde de platine, le noir de platine et l'éponge de platine.